# EUROPEAN PATENT APPLICATION

(11) **EP 3 854 617 A1**
(43) Date of publication of application: **28.07.2021**
(21) Application number: 18934128.2
(22) Date of filing: 21.09.2018
(51) Int. Cl.: B60K 6/36

(54) **HYBRID POWER TRANSMISSION AND HYBRID POWER VEHICLE**

(71) Applicant: Schaeffler Technologies AG & Co. KG, 91074 Herzogenaurach (DE)
(72) Inventor: QIU, Yong, Shanghai 201804 (CN); DI, Jie, Shanghai 201804 (CN)
(86) International application number: PCT/CN2018/106992
(87) International publication number: WO 2020/056731

(57) **Abstract**

The present invention relates to a hybrid power transmission for a hybrid power vehicle, the hybrid power transmission comprising a motor, a motor shaft connected to the motor, a transmission input shaft connected to an internal combustion engine, and a transmission output shaft. According to the design scheme of the present invention, the transmission input shaft and the motor shaft are arranged coaxially, and the motor shaft is designed as a hollow shaft, a first gear is disposed on the motor shaft in a sleeved manner, a third gear and a fifth gear are disposed on the transmission input shaft in a torsion-proof manner, a first synchronizer is disposed between the first gear and the third gear; a second gear is disposed on the transmission output shaft in a torsion-proof manner, the second gear meshing with the first gear, a fourth gear and a sixth gear are disposed on the transmission output shaft in a sleeved manner, the fourth gear meshing with the third gear, the sixth gear meshing with the fifth gear, and a second synchronizer is disposed between the fourth gear and the sixth gear. By switching the synchronizers, motor torque can be directly output to the transmission input shaft or output to the transmission output shaft.

## Description

### Technical Field

The present invention relates to a hybrid power transmission for a hybrid power vehicle. The hybrid power transmission comprises a motor, a motor shaft, a transmission input shaft and a transmission output shaft, wherein the transmission input shaft is connected to an internal combustion engine via a clutch, and the motor shaft is connected to the motor. The motor shaft can directly output torque to the transmission input shaft or directly output torque to the transmission output shaft.

### Background

In a current hybrid drive system, it is usually required to provide two motors to be connected to a hybrid transmission, and an internal combustion engine is connected to the hybrid power transmission via a hydraulic clutch. Thereby, the hybrid power transmission can implement a plurality of operating modes, such as a P2 mode (motor torque is directly transmitted to a transmission input), a P3 mode (motor torque is directly transmitted to a transmission output) and a P2.5 mode (which can be switched between the P2 mode and the P3 mode).

A hybrid drive system is known from CN 102259584 A. The system is provided with an internal combustion engine, two motors and two clutches. Since two input shafts and one output shaft are provided, the two input shafts are respectively connected to the output shaft via gear pairs; besides, the internal combustion engine is connected to the second input shaft via the second clutch, and the internal combustion engine and the second motor respectively output power through the two input shafts, thereby forming two gear positions for the forward gear of a vehicle.

However, the known hybrid power transmission can only provide a single gear position for both a traction motor and an internal combustion engine, which is insufficient to optimize an operating point of the motor or the internal combustion engine. The hydraulic clutch is engaged or disengaged according to the driving condition, so as to implement the switching between hybrid drive (engine-electric drive) and purely electric drive. For example, for highway driving, the internal combustion engine has higher efficiency and the vehicle speed is higher; at this time, the hydraulic clutch is engaged, and the internal combustion engine outputs torque only by means of a single gear position, which cannot coordinate the engine speed with the actual speed of wheels and cannot bring the best function of the engine into full play, while the motor of an integrated starter-generator operates only as a generator and cannot output torque. However, for urban driving, the efficiency of the internal combustion engine is very low, the vehicle speed is also low, the hydraulic clutch is disengaged, and the torque is outputted only by means of the single gear position of the motor, which cannot provide large torque due to the limitation of motor power. Therefore, the performance of the hybrid drive system having only a single gear position is not ideal. Furthermore, when multiple gear positions can be implemented, if only one motor is used, the power will be interrupted while switching the gear positions, thereby reducing the driving comfort; and if two motors are used, the cost of the hybrid drive system will increase.

### Summary

A technical problem to be solved by the present invention is to provide a hybrid power transmission for a hybrid power vehicle, wherein the hybrid power transmission has a compact design structure and enables the hybrid power vehicle to have both power performance and cost-effectiveness under various driving conditions.

The technical problem is solved by a hybrid power transmission for a hybrid power vehicle. The hybrid power transmission comprises a motor, a motor shaft, a transmission input shaft and a transmission output shaft, wherein the transmission input shaft is connected to an internal combustion engine via a clutch, and the motor shaft is connected to the motor. In the hybrid power transmission according to the present invention, the transmission input shaft and the motor shaft are arranged coaxially, the motor shaft is designed as a hollow shaft, the transmission input shaft extends through the motor shaft, wherein a first gear is disposed on the motor shaft in a sleeved manner, a third gear and a fifth gear are disposed on the transmission input shaft in a torsion-proof manner, a first synchronizer is disposed between the first gear and the third gear, wherein the first synchronizer can selectively connect the first gear to the motor shaft in a torsion-proof manner or connect the third gear to the motor shaft in a torsion-proof manner or is in the neutral position. Furthermore, a second gear is disposed on the transmission output shaft in a torsion-proof manner, wherein the second gear meshing with the first gear, a fourth gear and a sixth gear are disposed on the transmission output shaft in a sleeved manner, wherein the fourth gear meshing with the third gear, the sixth gear meshing with the fifth gear, wherein a second synchronizer is disposed between the fourth gear and the sixth gear, wherein the second synchronizer can selectively connect the fourth gear to the transmission output shaft in a torsion-proof manner or connect the sixth gear to the transmission output shaft in a torsion-proof manner or be in the neutral position. Therefore, the hybrid power transmission according to the present invention can implement a P2 mode and a P3 mode with a very simple structure, and in the process of shifting gears, torque is kept uninterrupted, that is, torque is continuously transmitted to wheels, thereby improving the driving comfort.

According to a preferred embodiment of the present invention, an output gear for outputting torque is disposed on the transmission output shaft in a torsion-proof manner. The output gear preferably meshes with a differential gear of a differential mechanism, so that torque can be outputted to the differential mechanism, thereby driving the wheels. The position of the output gear can be set according to the position of the differential gear, thereby making the overall structure more compact. Preferably, the output gear is disposed between the second gear and the fourth gear, which simplifies a torque transmission path while ensuring a compact structure.

According to another preferred embodiment of the present invention, a seventh gear and a ninth gear are disposed on the transmission input shaft in a torsion-proof manner, an eighth gear and a tenth gear are disposed on the transmission output shaft in a sleeved manner, wherein the seventh gear meshing with the eighth gear, the ninth gear meshing with the tenth gear, wherein a third synchronizer is disposed between the eighth gear and the tenth gear, wherein the third synchronizer can selectively connect the eighth gear to the transmission output shaft in a torsion-proof manner or connect the tenth gear to the transmission output shaft in a torsion-proof manner or be in the neutral position. Therefore, two transmission stages (one transmission stage is the seventh gear and the eighth gear, and the other transmission stage is the ninth gear and the tenth gear) are added to the hybrid power transmission according to the present invention, that is, two gears are added, so that the hybrid power transmission according to the present invention has more gear options in the drive mode, improving the driving comfort. Certainly, it is also possible to consider adding more transmission stages or reducing transmission stages to meet different requirements.

According to further preferred embodiment of the present invention, the clutch of the hybrid power vehicle is a dry clutch, so that the structural cost can be reduced and the transmission efficiency can be improved. Additionally, it is advantageous to place the clutch in the housing of the motor of the hybrid transmission, so that the structural space can be saved and the efficiency of integration of the overall structure can be improved.

According to further preferred embodiment of the present invention, the hybrid power transmission has only one motor. Compared with the hybrid power transmission having two motors, it not only reduces the cost of components, but also simplifies the overall structure. The hybrid power transmission according to the present invention only needs one motor, such that the P2 mode or the P3 mode can be selectively run.

The technical problem can also be solved by a hybrid power vehicle. The hybrid power vehicle has the hybrid power transmission as described above.

### Brief Description of the Drawings

The embodiments of the present invention will be described in detail below with reference to drawings. Drawings are as follows:
FIG. 1 is a schematic diagram of the structure of the hybrid power transmission according to the first embodiment of the present invention;
FIG. 2 is a schematic diagram of torque transmission in purely electric drive mode of the hybrid power transmission according to FIG. 1;
FIG. 3 is a schematic diagram of torque transmission in purely internal combustion engine drive mode of the hybrid power transmission according to FIG. 1;
FIG. 4 is a schematic diagram of torque transmission in hybrid drive mode of the hybrid power transmission according to FIG. 1;
FIG. 5 is a schematic diagram of torque transmission in charging mode and energy recovery mode of the hybrid power transmission shown in FIG. 1;
FIG. 6 is a schematic diagram of torque transmission in an internal combustion engine starting mode of the hybrid power transmission shown in FIG. 1; and
FIG. 7 is a diagram of operating modes of the hybrid power transmission shown in FIG. 1 under different clutch and synchronizer states.

In the drawings, the same reference numerals refer to the identical or functionally identical components.

### Detailed Description

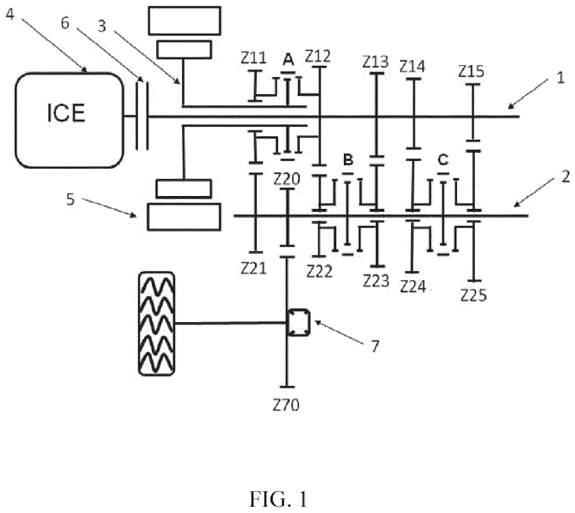

FIG. 1 shows a schematic diagram of the structure of a hybrid power transmission according to an embodiment of the present invention. As shown, a vehicle according to the present invention has an internal combustion engine 4, a clutch 6, a differential mechanism 7, and a hybrid transmission, wherein the hybrid power transmission has the only motor 5, a transmission input shaft 1, a second transmission output shaft 3 (motor shaft), a transmission output shaft 2, a first synchronizer A, a second synchronizer B, a third synchronizer C, and five gear pairs Z11-Z21, Z12-Z22, Z13-Z23, Z14-Z24 and Z15-Z25.

In this embodiment, the transmission input shaft 1 is connected to the internal combustion engine 4 via the dry clutch 6, the motor shaft 3 is connected to the motor 5 in a torsion-proof manner, wherein the transmission input shaft 1 and the motor shaft 3 are coaxially arranged, the motor shaft 3 is a hollow shaft, and the transmission input shaft 1 extends through the motor shaft 3 coaxially.

A first gear Z11 is disposed on the motor shaft 3 in a sleeved manner via a bearing. On the transmission input shaft 2, the third gear Z12, the fifth gear Z13, the seventh gear Z14 and the ninth gear Z 15 are sequentially disposed in an axial direction away from the clutch 6 in a torsion-proof manner, wherein the first synchronizer A is seated between the first gear Z11 and the third gear Z12; and the first synchronizer A is connected to the motor shaft 3 in a torsion-proof manner, so that the first synchronizer A can selectively connect the first gear Z11 to the motor shaft 3 in a torsion-proof manner or connect the third gear Z12 to the motor shaft 3 in a torsion-proof, or be in neutral idle state. Therefore, the first synchronizer A has three gear positions, i.e., L position, N position and R position. When the first synchronizer A is in the L position, the first gear Z11 is connected to the motor shaft 3 in a torsion-proof manner; when the first synchronizer A is in the N position, the synchronizer is in an idling state; and when the first synchronizer A is in the R position, the third gear Z12 is connected to the motor shaft 3 in a torsion-proof manner.

The second gear Z21, the fourth gear Z22, the sixth gear Z23, the eighth gear Z24 and the tenth gear Z25 which respectively meshes with the first gear Z11, the third gear Z12, the fifth gear Z13, the seventh gear Z14 and the ninth gear Z15 are disposed on the transmission output shaft 2. The second gear Z21 is connected to the transmission output shaft 2 in a torsion-proof manner. The fourth gear Z22, the sixth gear Z23, the eighth gear Z24 and the tenth gear Z25 are respectively disposed on the transmission output shaft 2 in a sleeved manner. The second synchronizer B is disposed between the fourth gear Z22 and the sixth gear Z23, and the third synchronizer C is disposed between the eighth gear Z24 and the tenth gear Z25. Like the first synchronizer A, the second synchronizer B and the third synchronizer C each also has three gear positions, namely L position, N position and R position. When the second synchronizer B is in the L position, the fourth gear Z22 is connected to the transmission output shaft 2 in a torsion-proof manner; when the second synchronizer B is in the N position, the synchronizer is in an idling state; and when the second synchronizer B is in the R position, the sixth gear Z23 is connected to the transmission output shaft 2 in a torsion-proof manner. When the third synchronizer C is in the L position, the eighth gear Z24 is connected to the transmission output shaft 2 in a torsion-proof manner; when the third synchronizer C is in the N position, the synchronizer is in an idling state; and when the third synchronizer C is in the R position, the tenth gear Z25 is connected to the transmission output shaft 2 in a torsion-proof manner.

An output gear Z20 is further disposed between the second gear Z21 and the fourth gear Z22. The output gear Z20 is connected to the transmission output shaft 2 in a torsion-proof manner and can transmit power to the differential mechanism 7, preferably via a differential gear Z70. Certainly, it is also possible to consider arranging the output gear Z20 at other positions on the transmission output shaft 2 as long as the output gear Z20 is connected to the transmission output shaft 2 in a torsion-proof manner. The position of the output gear Z20 can be adjusted according to the overall assembly requirements.

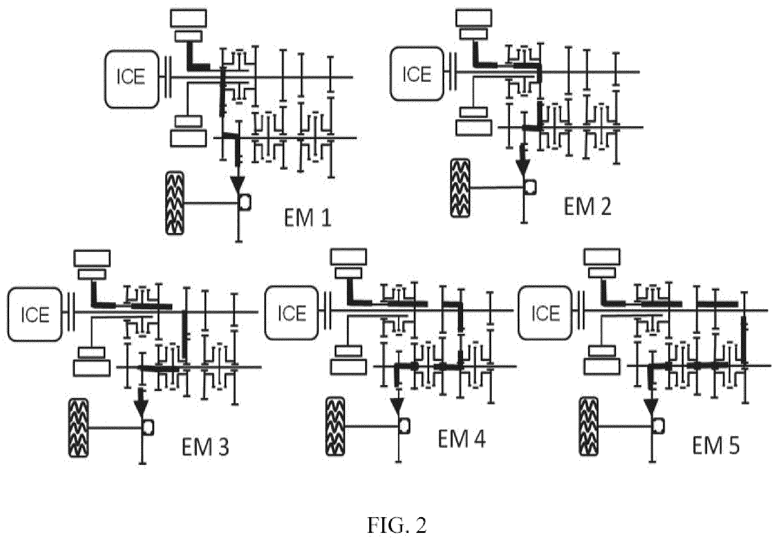

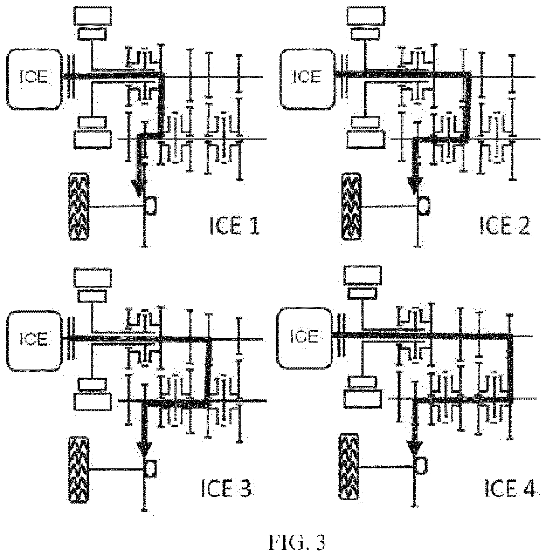

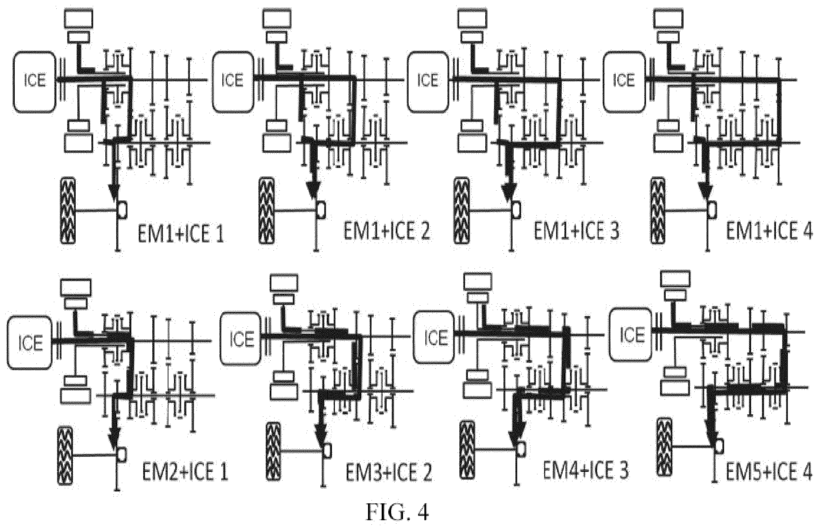

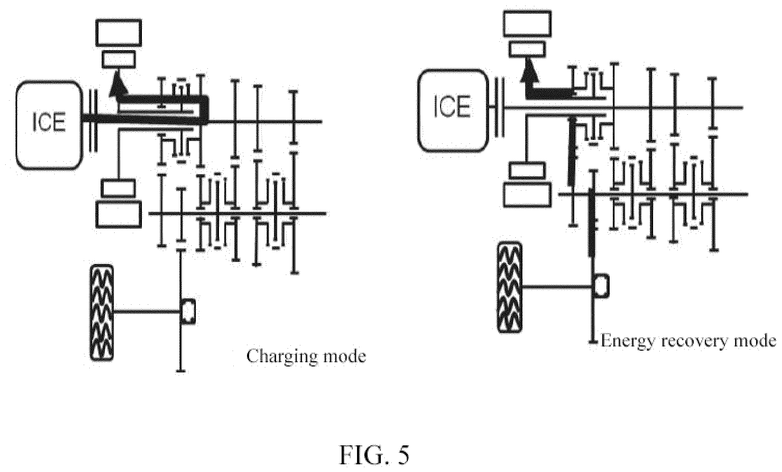

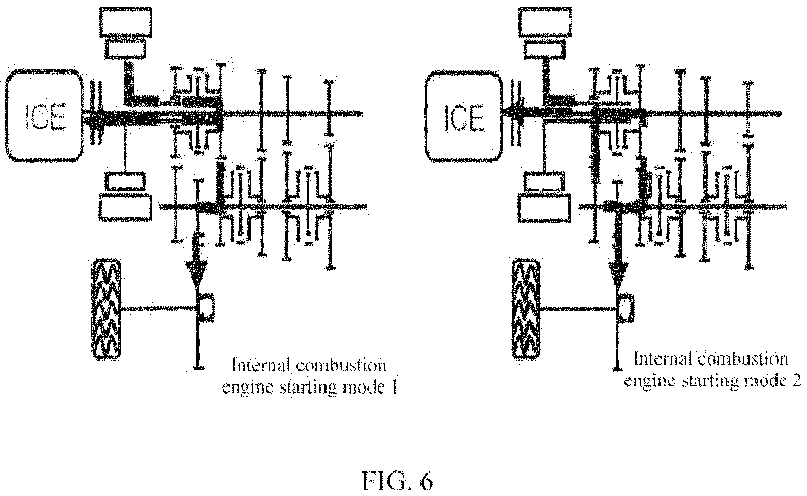

By means of the structural mode of the hybrid power transmission and the changes of gear positions of the synchronizer according to this embodiment, a power system of the hybrid power vehicle according to the present invention can implement the following modes:
1) Purely motor drive mode: In the purely electric drive mode, the hybrid power transmission according to the present invention can implement 5 gears, as shown in FIG. 2:
   EM 1: The synchronizer A is in the L position, the synchronizers B and C are in the N position, and the clutch 6 is in a disengaged state. The torque of the motor 5 is transmitted from the motor shaft 3 to the transmission output shaft 2 via the gear pair Z11-Z21, and then transmitted to the differential mechanism 7 via the gear Z20, thereby driving the wheels to rotate.
   EM 2: The synchronizer A is in the R position, the synchronizer B is in the L position, the synchronizer C is in the N position, and the clutch 6 is in a disengaged state. The torque of the motor 5 is transmitted from the motor shaft 3 to the transmission output shaft 2 via the gear pair Z12-Z22, and then transmitted to the differential mechanism 7 via the gear Z20, thereby driving the wheels to rotate.
   EM 3: The synchronizer A is in the R position, the synchronizer B is in the R position, the synchronizer C is in the N position, and the clutch 6 is in a disengaged state. The torque of the motor 5 is transmitted from the motor shaft 3 to the transmission output shaft 2 via the gear pair Z13-Z23, and then transmitted to the differential mechanism 7 via the gear Z20, thereby driving the wheels to rotate.
   EM 4: The synchronizer A is in the R position, the synchronizer B is in the N position, the synchronizer C is in the L position, and the clutch 6 is in a disengaged state. The torque of the motor 5 is transmitted from the motor shaft 3 to the transmission output shaft 2 via the gear pair Z14-Z24, and then transmitted to the differential mechanism 7 via the gear Z20, thereby driving the wheels to rotate.
   EM 5: The synchronizer A is in the R position, the synchronizer B is in the N position, the synchronizer C is in the R position, and the clutch 6 is in a disengaged state. The torque of the motor 5 is transmitted from the motor shaft 3 to the transmission output shaft 2 via the gear pair Z15-Z25, and then transmitted to the differential mechanism 7 via the gear Z20, thereby driving the wheels to rotate.
2) Purely internal combustion engine drive mode: In the purely internal combustion engine drive mode, the hybrid power transmission according to the present invention can implement 4 gears, as shown in FIG. 3:
   ICE 1: The synchronizer A is in the N position, the synchronizer B is in the L position, the synchronizer C is in the N position, the clutch 6 is engaged, and the motor does not operate. The torque of the internal combustion engine 4 is transmitted from the transmission input shaft 1 to the transmission output shaft 2 via the gear pair Z12-Z22, and then transmitted to the differential mechanism 7 via the gear Z20, thereby driving the wheels to rotate.
   ICE 2: The synchronizer A is in the N position, the synchronizer B is in the R position, the synchronizer C is in the N position, the clutch 6 is engaged, and the motor does not operate. The torque of the internal combustion engine 4 is transmitted from the transmission input shaft 1 to the transmission output shaft 2 via the gear pair Z13-Z23, and then transmitted to the differential mechanism 7 through the gear Z20, thereby driving the wheels to rotate.
   ICE 3: The synchronizer A is in the N position, the synchronizer B is in the N position, the synchronizer C is in the L position, the clutch 6 is engaged, and the motor does not operate. The torque of the internal combustion engine 4 is transmitted from the transmission input shaft 1 to the transmission output shaft 2 via the gear pair Z14-Z24, and then transmitted to the differential mechanism 7 via the gear Z20, thereby driving the wheels to rotate.
   ICE 4: The synchronizer A is in the N position, the synchronizer B is in the N position, the synchronizer C is in the R position, the clutch 6 is engaged, and the motor does not operate. The torque of the internal combustion engine 4 is transmitted from the transmission input shaft 1 to the transmission output shaft 2 via the gear pair Z15-Z25, and then transmitted to the differential mechanism 7 via the gear Z20, thereby driving the wheels to rotate.
3) Hybrid drive mode: Both the internal combustion engine 4 and the motor 5 provide power, and the hybrid power transmission according to the present invention can implement 8 gears in the hybrid drive mode, as shown in FIG. 4:
   EM1 + ICE1: The synchronizer A is in the L position, the synchronizer B is in the L position, the synchronizer C is in the N position, and the clutch K0 is engaged. The torque of the internal combustion engine 4 is transmitted from the transmission input shaft 1 to the transmission output shaft 2 via the gear pair Z12-Z22; and the torque of the motor 5 is transmitted from the motor shaft 3 to the transmission output shaft 2 via the gear pair Z11-Z21. Therefore, the power coupling between the internal combustion engine 4 and the motor 5 drives the gear Z20 to transmit the torque to the differential mechanism 7, thereby driving the wheels to rotate.
   EM1 + ICE2: The synchronizer A is in the L position, the synchronizer B is in the R position, the synchronizer C is in the N position, and the clutch K0 is engaged. The torque of the internal combustion engine 4 is transmitted from the transmission input shaft 1 to the transmission output shaft 2 via the gear pair Z13-Z23; and the torque of the motor 5 is transmitted from the motor shaft 3 to the transmission output shaft 2 via the gear pair Z11-Z21. Therefore, the power coupling between the internal combustion engine 4 and the motor 5 drives the gear Z20 to transmit the torque to the differential mechanism 7, thereby driving the wheels to rotate.
   EM1 + ICE3: The synchronizer A is in the L position, the synchronizer B is in the N position, the synchronizer C is in the L position, and the clutch K0 is engaged. The torque of the internal combustion engine 4 is transmitted from the transmission input shaft 1 to the transmission output shaft 2 via the gear pair Z14-Z24; and the torque of the motor 5 is transmitted from the motor shaft 3 to the transmission output shaft 2 via the gear pair Z11-Z21. Therefore, the power coupling between the internal combustion engine 4 and the motor 5 drives the gear Z20 to transmit the torque to the differential mechanism 7, thereby driving the wheels to rotate.
   EM1 + ICE4: The synchronizer A is in the L position, the synchronizer B is in the N position, the synchronizer C is in the R position, and the clutch K0 is engaged. The torque of the internal combustion engine 4 is transmitted from the transmission input shaft 1 to the transmission output shaft 2 via the gear pair Z15-Z25; and the torque of the motor 5 is transmitted from the motor shaft 3 to the transmission output shaft 2 via the gear pair Z11-Z21. Therefore, the power coupling between the internal combustion engine 4 and the motor 5 drives the gear Z20 to transmit the torque to the differential mechanism 7, thereby driving the wheels to rotate.
   EM2 + ICE1: The synchronizer A is in the R position, the synchronizer B is in the L position, the synchronizer C is in the N position, and the clutch K0 is engaged. The torque of the internal combustion engine 4 is transmitted from the transmission input shaft 1 to the transmission output shaft 2 via the gear pair Z12-Z22; and the torque of the motor 5 is transmitted from the motor shaft 3 to the transmission output shaft 2 also via the gear pair Z12-Z21. Therefore, the power coupling between the internal combustion engine 4 and the motor 5 drives the gear Z20 to transmit the torque to the differential mechanism 7, thereby driving the wheels to rotate.
   EM3 + ICE2: The synchronizer A is in the R position, the synchronizer B is in the R position, the synchronizer C is in the N position, and the clutch K0 is engaged. The torque of the internal combustion engine 4 is transmitted from the transmission input shaft 1 to the transmission output shaft 2 via the gear pair Z13-Z23; and the torque of the motor 5 is transmitted from the motor shaft 3 to the transmission output shaft 2 also via the gear pair Z13-Z23. Therefore, the power coupling between the internal combustion engine 4 and the motor 5 drives the gear Z20 to transmit the torque to the differential mechanism 7, thereby driving the wheels to rotate.
   EM4 + ICE3: The synchronizer A is in the R position, the synchronizer B is in the N position, the synchronizer C is in the L position, and the clutch K0 is engaged. The torque of the internal combustion engine 4 is transmitted from the transmission input shaft 1 to the transmission output shaft 2 via the gear pair Z14-Z24; and the torque of the motor 5 is transmitted from the motor shaft 3 to the transmission output shaft 2 also via the gear pair Z14-Z24. Therefore, the power coupling between the internal combustion engine 4 and the motor 5 drives the gear Z20 to transmit the torque to the differential mechanism 7, thereby driving the wheels to rotate.
   EM5 + ICE4: The synchronizer A is in the R position, the synchronizer B is in the N position, the synchronizer C is in the R position, and the clutch K0 is engaged. The torque of the internal combustion engine 4 is transmitted from the transmission input shaft 1 to the transmission output shaft 2 via the gear pair Z15-Z25; and the torque of the motor 5 is transmitted from the motor shaft 3 to the transmission output shaft 2 also via the gear pair Z15-Z25. Therefore, the power coupling between the internal combustion engine 4 and the motor 5 drives the gear Z20 to transmit the torque to the differential mechanism 7, thereby driving the wheels to rotate.
4) Charging mode: As shown in FIG. 5, the synchronizer A is in the R position, the synchronizer B is in the N position, the synchronizer C is in the N position, and the clutch K0 is engaged. The torque of the internal combustion engine 4 is transmitted to the motor shaft 1 via the transmission input shaft 1, the gear Z11 and the first synchronizer A, so that mechanical energy is converted into electrical energy, which is stored in an energy storage element such as a storage battery, thereby implementing the charging function.
5) Energy recovery mode: As shown in FIG. 5, an energy recovery process is the reverse of the purely motor drive process, so a synchronizer connection mode is the same as the purely motor drive mode. In the energy recovery mode, the motor does not provide torque, and the torque is transmitted from the wheels to the transmission output shaft and then drives the motor shaft via a gear pair Z21-Z11, or drives the transmission input shaft via a gear pair Z22-Z12 or Z23-Z13 or Z24-Z14 or Z25-Z15, and then drives the motor shaft via the synchronizer A, so that mechanical energy is converted into electrical energy, which is stored in an energy storage element such as a storage battery, thereby implementing the energy recovery function.
6) Internal combustion engine starting mode: As shown in FIG. 6, the solution according to the present invention comprises two internal combustion engine starting modes: an internal combustion engine starting mode 1 and an internal combustion engine starting mode 2, and changes of 4 gears can be implemented in each mode.

Internal combustion engine starting mode 1: The synchronizer A is in the R position, the synchronizer B is in the L or R position, the synchronizer C is in the N position, or the synchronizer A is in the R position, the synchronizer B is in the N position, the synchronizer C is in the L or R position, and the clutch K0 is engaged. Torque provided by the motor 5 is transmitted to the transmission input shaft via the synchronizer A and then transmitted to the internal combustion engine via the clutch K0, causing the internal combustion engine to rotate, thereby starting the internal combustion engine; besides, the transmission input shaft can drive the transmission output shaft via a gear pair Z12-Z22 or Z13-Z23 or Z14-Z24 or Z15-Z25, thereby driving the wheels to rotate, so that the vehicle will not lose power when staring the internal combustion engine.

Internal combustion engine starting mode 2: The synchronizer A is in the L position, the synchronizer B is in the L or R position, the synchronizer C is in the N position, or the synchronizer A is in the L position, the synchronizer B is in the N position, the synchronizer C is in the L or R position, and the clutch K0 is engaged. Torque provided by the motor 5 is transmitted to the gear pair Z11-Z21 via the synchronizer A to drive the transmission output shaft, then drives the transmission input shaft via the gear pair Z22-Z12 or Z23-Z13 or Z24-Z14 or Z25-Z15, and finally is transmitted to the internal combustion engine via the clutch K0, thereby rotating the internal combustion engine to start the internal combustion engine; besides, the transmission output shaft can drive the wheels to rotate via the gear pair Z20-Z70, so that the vehicle will not lose power when starting the internal combustion engine.

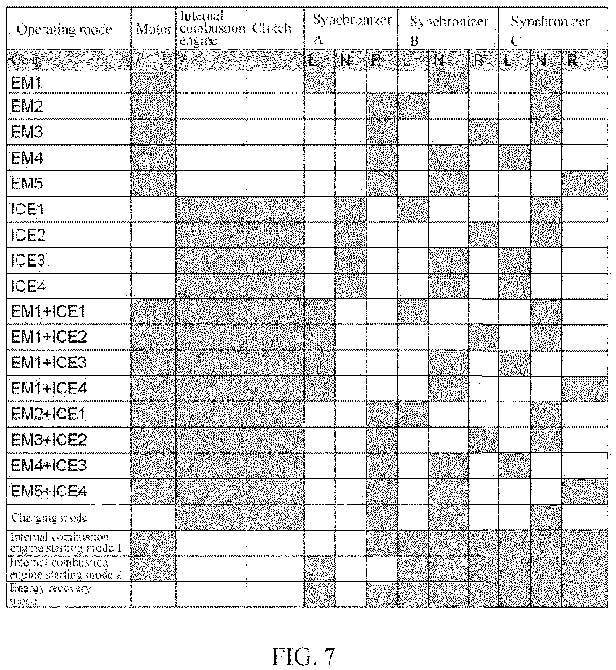

From the table shown in FIG. 7, operating modes of the transmission when the clutch and synchronizer are in different states can be clearly seen, wherein the operation states of the motor and the internal combustion engine are marked in gray, the engaged state of the clutch is marked in gray, and the selected gear of the synchronizer is marked in gray.

The hybrid drive system designed according to the present invention can implement both the P2 mode and the P3 mode by switching the synchronizers and only needs one motor, thereby greatly reducing the cost. 4 gears can be implemented when operating in the purely internal combustion engine drive mode, 5 gears can be implemented when operating in the purely motor drive mode, and 8 gears can be implemented when operating in the hybrid mode, so the driving requirements of vehicles under different working conditions are well met. When shifting gears, torque compensation is performed for the vehicle, which improves the smoothness of gear shifting and thus improves the driving comfort.

Although possible embodiments have been described illustratively in the above description, it should be understood that there are still lots of variations on the embodiments result from combinations of all known technical features and embodiments as well as those are readily apparent to those skilled in the art. In addition, it should be further understood that the exemplary embodiments are just examples and shall not in any way limit the scope of protection, application and construction of the present invention. Through the foregoing description, it's more about to providing those skilled in the art a technical guide for converting at least one exemplary embodiment, in which various changes, especially changes in the functions and structures of the components, can be made as long as they do not depart from the scope of protection of the claims.

### LIST OF REFERENCE NUMERALS

- 1: Transmission input shaft
- 2: Transmission output shaft
- 3: Motor shaft
- 4: Internal combustion engine
- 5: Motor
- 6: Clutch
- 7: Differential mechanism
- Z11: First gear
- Z21: Second gear
- Z12: Third gear
- Z22: Fourth gear
- Z13: Fifth gear
- Z23: Sixth gear
- Z14: Seventh gear
- Z24: Eighth gear
- Z15: Ninth gear
- Z25: Tenth gear
- Z20: Output gear
- Z70: Differential gear
- A: First synchronizer
- B: Second synchronizer
- C: Third synchronizer
- K0: Clutch

## Claims

1. A hybrid power transmission for a hybrid power vehicle, said hybrid power transmission comprising a motor (5), a motor shaft (3), a transmission input shaft (1) and a transmission output shaft (2), wherein the transmission input shaft (1) is connected to an internal combustion engine (4) via a clutch (K0), and the motor shaft (3) is connected to the motor (5),
wherein
the transmission input shaft (1) and the motor shaft (3) are arranged coaxially, and the motor shaft (5) is designed as a hollow shaft, the transmission input shaft (1) extends through the motor shaft (3), wherein a first gear (Z11) is disposed on the motor shaft (3) in a sleeved manner, a third gear (Z12) and a fifth gear (Z13) are disposed on the transmission input shaft (1) in a torsion-proof manner, a first synchronizer (A) is disposed between the first gear (Z11) and the third gear (Z12), wherein, the first synchronizer (A) can selectively connect the first gear (Z11) to the motor shaft (3) in a torsion-proof manner or connect the third gear (Z12) to the motor shaft (3) in a torsion-proof manner or be in the neutral position,
a second gear (Z21) is disposed on the transmission output shaft (2) in a torsion-proof manner, wherein the second gear (Z21) is meshed with the first gear (Z11), a fourth gear (Z22) and a sixth gear (Z23) are disposed on the transmission output shaft (2) in a sleeved manner, wherein the fourth gear (Z22) meshing with the third gear (Z12), the sixth gear (Z23) meshing with the fifth gear (Z13), wherein a second synchronizer (B) is disposed between the fourth gear (Z22) and the sixth gear (Z23), wherein the second synchronizer (B) can selectively connect the fourth gear (Z22) to the transmission output shaft (2) in a torsion-proof manner or connect the sixth gear (Z23) to the transmission output shaft (2) in a torsion-proof manner or be in the neutral position.

2. The hybrid power transmission according to claim 1, wherein an output gear (Z20) for outputting torque is disposed on the transmission output shaft (2) in a torsion-proof manner.

3. The hybrid power transmission according to claim 2, wherein the output gear (Z20) is disposed between the second gear (Z21) and the fourth gear (Z22).

4. The hybrid power transmission according to claim 1, wherein a seventh gear (Z14) and a ninth gear (Z15) are disposed on the transmission input shaft (1) in a torsion-proof manner, an eighth gear (Z24) and a tenth gear (Z25) are disposed on the transmission output shaft (2) in a sleeved manner, wherein the seventh gear (Z14) meshing with the eighth gear (Z24), the ninth gear (Z15) meshing with the tenth gear (Z25), wherein a third synchronizer (C) is disposed between the eighth gear (Z24) and the tenth gear (Z25), wherein the third synchronizer (C) can selectively connect the eighth gear (Z24) to the transmission output shaft (2) in a torsion-proof manner or connect the tenth gear (Z25) to the transmission output shaft (2) in a torsion-proof manner or be in the neutral position.

5. The hybrid power transmission according to claim 1, wherein the clutch (K0) is a dry clutch.

6. The hybrid power transmission according to claim 1, wherein the clutch (K0) is seated in a housing of the motor (5).

7. The hybrid power transmission according to claim 1, wherein the hybrid power transmission has only one motor (5).

8. A hybrid power vehicle, wherein the hybrid power vehicle has the hybrid power transmission according to any one of claims 1 to 7.
